# DEMANDE DE BREVET EUROPEEN

(11) **EP 3 469 885 A1**
(43) Date de publication de la demande: **17.04.2019**
(21) Numéro de dépôt: 18199826.1
(22) Date de dépôt: 11.10.2018
(51) Int. Cl.: A01F 25/20, A01D 61/02, B65G 39/073

(54) **ROULEAU CYLINDRIQUE COMPORTANT DEUX PORTIONS AVEC DES LAMES ET MACHINE AGRICOLE COMPORTANT UN TEL ROULEAU**

(30) Priorité: 13.10.2017 FR 1759590
(71) Demandeur: Kuhn-Audureau SA, 85260 La Copechagnière (FR)
(72) Inventeur: BERTHELOT, Emmanuel, 85290 SAINT LAURENT SUR SEVRE (FR); GUIDAULT, Léandre, 85000 LA ROCHE SUR YON (FR)
(74) Mandataire: Esch, Esther Evelyne

(57) **Abrégé**

La présente invention concerne un rouleau cylindrique (1, 7, 8) d'axe longitudinal (AL) comportant au moins un arbre support (2) permettant au rouleau (1, 7, 8) de tourner autour d'un axe longitudinal (AL) et au moins un flasque (3) s'étendant transversalement à l'axe longitudinal (AL).

L'invention est caractérisée en ce que le rouleau (1, 7, 8) comporte deux portions (22A, 22B, 22C, 22D) à section générale cylindrique, chaque portion (22A, 22B, 22C, 22D) comporte une pluralité de lames (23) réparties sur le pourtour de la portion (22A, 22B, 22C, 22D) et que deux portions (22A, 22B, 22C, 22D) voisines sont organisées en alternance. L'invention concerne également un dispositif de déplacement (5) et une machine agricole comportant un tel rouleau cylindrique (1, 7, 8).

## Description

La présente invention concerne le domaine des dispositifs de déplacement utilisant des rouleaux et une bande de roulement destinée à acheminer du produit, plus particulièrement un rouleau et une bande transporteuse destinés à être utilisés dans le machinisme agricole. L'invention se rapporte à un rouleau cylindrique, un dispositif de déplacement équipé d'un tel rouleau cylindrique et une machine agricole comportant un tel dispositif de déplacement.

Dans certaines applications dans le domaine agricole, des machines ou véhicules sont équipés d'un dispositif de déplacement ou d'un convoyeur pour transporter du produit de manière à remplir leur fonction. Tel est notamment le cas pour les mélangeuses distributrices et pour les andaineurs à tapis.

Une mélangeuse, connue du document FR 2 998 131 A1**,** dispose notamment d'une cuve de mélange et d'un bras de chargement portant une fraise de chargement et un dispositif de déplacement. Les produits chargés par la fraise de chargement sont transportés par le dispositif de déplacement jusqu'à la cuve de mélange. Pour ce faire, le dispositif de déplacement comporte un rouleau antérieur disposé en aval et à proximité de la fraise de chargement et un rouleau postérieur disposé à proximité de la cuve de mélange et une bande transporteuse enroulée autour des rouleaux. La bande transporteuse est mise en mouvement au moyen d'un moteur agissant sur le rouleau postérieur. Elle transporte des produits tels que du foin, de la paille, de l'ensilage ou de l'enrubanné qui sont saisis au sol par la fraise et emmenés vers la cuve de mélange. Lors du transport jusqu'à la cuve de mélange, il arrive que du produit tombe du brin extérieur sur le brin intérieur de la bande transporteuse. Le produit va s'accumuler entre le rouleau et la bande transporteuse et créer une couche qui va réduire le coefficient de frottement et entraîner un glissement important de la bande transporteuse. Ce problème est aggravé avec de l'ensilage et de l'enrubanné qui sont des matières organiques humides puisque le produit va alors avoir tendance à adhérer à la bande transporteuse et aux rouleaux. Cette accumulation de produit va créer un gonflement de la bande transporteuse. Dans certains cas, l'accumulation de produits sera telle que la bande transporteuse va être déviée de sa trajectoire. Des mesures pour réduire voire pour éliminer ces accumulations de produits sont par exemple d'augmenter la tension de la bande transporteuse ou de nettoyer les rouleaux et la bande transporteuse. L'augmentation de la tension de la bande transporteuse a pour conséquence une usure et/ou une rupture prématurée de la bande transporteuse et/ou des rouleaux. L'opération de nettoyage est longue et fastidieuse. Ces mesures ne sont que partiellement efficaces.

Sur une autre mélangeuse connue de ce genre, la surface du rouleau en contact avec la bande transporteuse est équipée de barres sur toute la largeur. Ces barres sont réparties à intervalles réguliers autour de l'enveloppe extérieure du rouleau. La présence des barres réduit la tendance à adhérer du produit tout en restant sujet au colmatage au niveau des espaces entre les barres. Par contre, on observe un fonctionnement avec des saccades généré par les barres soudées sur le pourtour du rouleau. Ce fonctionnement saccadé impacte d'une part la bande transporteuse qui va s'abîmer plus vite et d'autre part l'environnement par le bruit engendré.

La présente invention a pour but de remédier aux inconvénients précités. Elle doit notamment proposer un rouleau cylindrique moins sujet au colmatage et avec un fonctionnement plus fluide.

A cet effet, une importante caractéristique de l'invention consiste en ce que le rouleau comporte deux portions à section générale cylindrique, chaque portion comporte une pluralité de lames réparties sur le pourtour de la portion et deux portions voisines sont organisées en alternance. Grâce à cette structure spécifique, la rotation du rouleau est régulière et plus uniforme. Ce rouleau cylindrique est moins enclin au colmatage et surtout moins bruyant.

Selon une autre caractéristique avantageuse de l'invention, deux portions voisines sont décalées angulairement, préférentiellement régulièrement, autour de l'axe longitudinal de telle sorte que les lames de chacune des portions soient désalignées. Cet arrangement en alternance permet un contact alterné et réparti des lames sur la largeur de la bande transporteuse. Le fonctionnement est donc plus fluide.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue en perspective d'un rouleau cylindrique selon l'invention ;
- les figures 2 et 3 illustrent le rouleau de la figure 1 selon une vue de côté et une vue de dessus ;
- la figure 4 représente selon une vue latérale une machine équipée d'au moins un rouleau selon l'invention ;
- la figure 5 représente une vue partielle en perspective du bras de chargement comportant au moins un rouleau selon l'invention ;
- la figure 6 représente une vue en perspective d'un autre rouleau selon l'invention ;
- la figure 7 illustre une vue de dessus d'un rouleau selon un autre mode de réalisation.

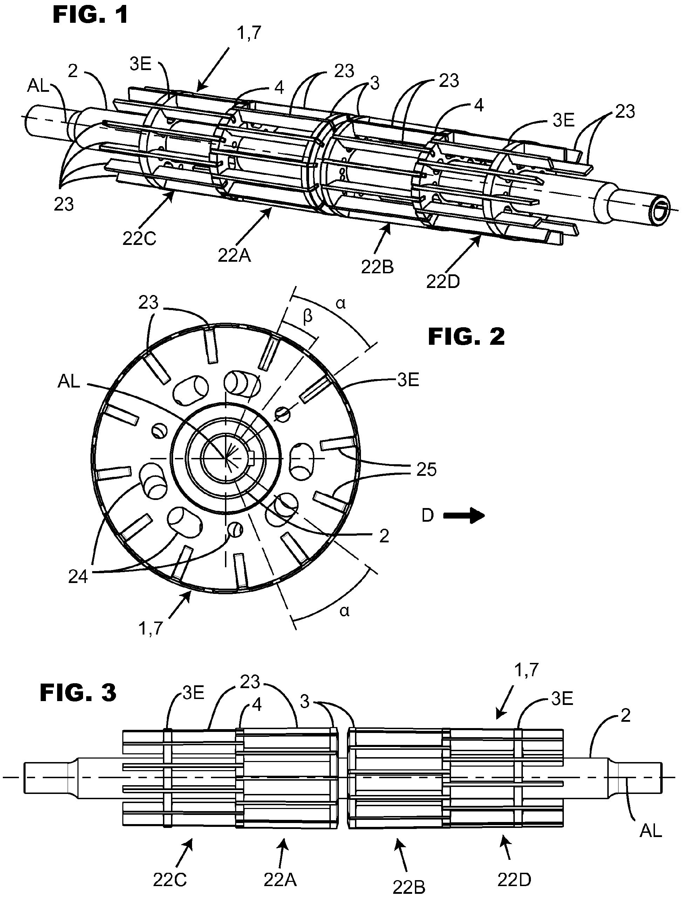

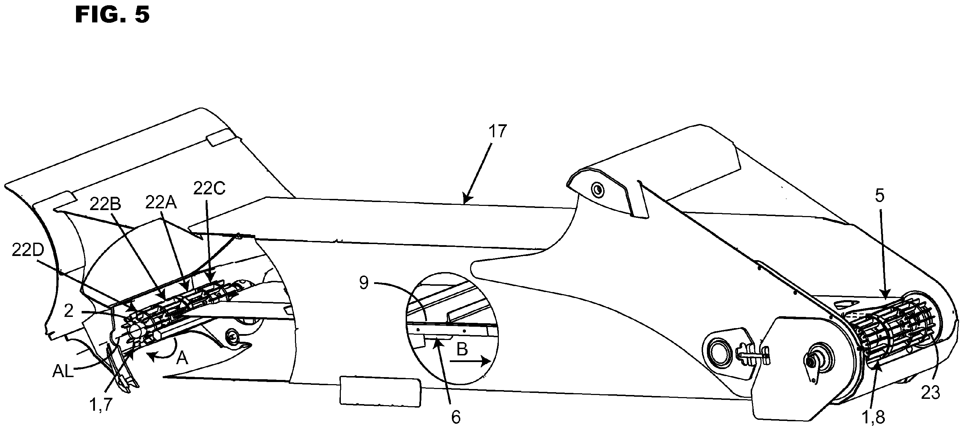

La figure 1 représente le rouleau (1) cylindrique selon l'invention. Un tel rouleau est utilisé avec un dispositif de déplacement destiné à transporter du produit. Le rouleau (1) cylindrique d'un axe longitudinal (AL) comporte au moins un arbre support (2) et au moins un flasque (3). L'arbre support (2) permet au rouleau (1) de tourner autour de l'axe longitudinal (AL). L'arbre support (2) est réalisé sous forme d'un arbre continu ou de deux parties d'arbres fixées à chaque extrémité du rouleau (1). L'arbre support (2) est monté rotatif sur le flasque (3). Le flasque (3) s'étend transversalement à l'axe longitudinal (AL) du rouleau (1). De manière générale, un tel rouleau (1) équipe un dispositif de déplacement (5) lequel est illustré à la figure 5. Le dispositif de déplacement (5) comporte une bande transporteuse (6) enroulée autour d'au moins deux rouleaux (1). La bande transporteuse (6) est tendue et forme une boucle sans fin autour d'un rouleau, dit rouleau moteur (7), qui permet l'entraînement de la bande transporteuse (6) et d'un autre rouleau, dit rouleau suiveur (8). Ainsi, lorsque le rouleau moteur ou d'entraînement tourne dans le sens de la flèche A, la bande transporteuse (6) se déplace dans le sens B.

Ce type de dispositif de déplacement avec des rouleaux et une bande transporteuse peut être utilisé dans différentes applications et industries.

Dans le domaine agricole, un tel dispositif de déplacement (5) équipe une machine ou un véhicule, par exemple du type mélangeuse (10). Ce type de véhicule ou machine est destiné à assurer la distribution de mélange d'aliments pour nourrir le bétail. En fonction de l'équipement de la mélangeuse, cette dernière pourra être capable de collecter, de traiter/mélanger et/ou de distribuer du mélange d'aliments, aussi appelé produit dans la suite de la description. Le terme « produit » désignera un mélange d'aliments et/ou un aliment unique. Le produit pourra être fibreux, par exemple foin, paille, ensilage, enrubanné ; granulaire ou pulvérulent, comme par exemple des concentrés ou de la poudre pour complémenter la ration.

Un tel dispositif de déplacement souvent dénommé convoyeur est également présent sur des machines agricoles, telles que des machines de récolte de fourrage par exemple, un andaineur à tapis ou une faucheuse. Le convoyeur permet de transférer des plantes comme de l'herbe, du foin, de la paille d'un convoyeur vers un autre convoyeur ou vers un autre équipement. Dans ces applications, le transport des plantes se fait à plat et généralement transversalement à la direction de déplacement de la machine agricole attelée à un tracteur, de manière à former une ligne de fourrage ou un andain sur l'un au moins des côtés de la machine.

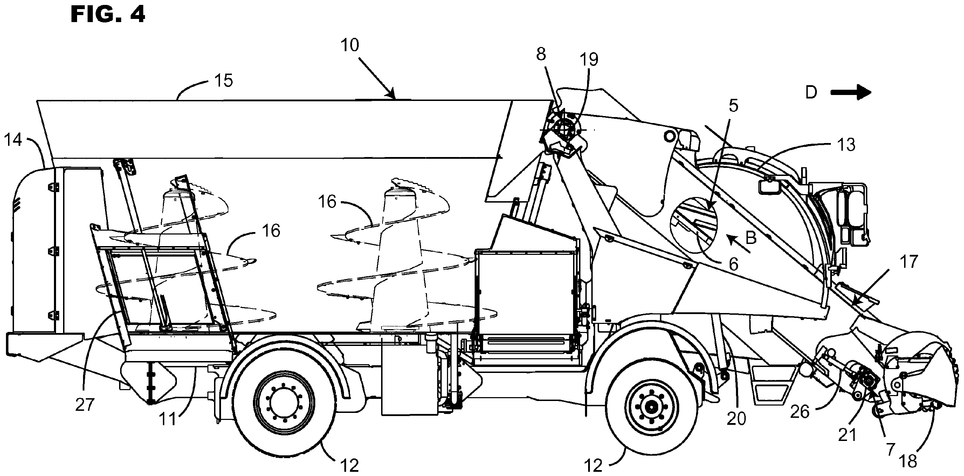

Dans l'exemple de réalisation représenté à la figure 4, il s'agit d'une mélangeuse (10) automotrice qui dispose d'équipements pour collecter, traiter et distribuer le produit mélangé. La mélangeuse (10) comporte un châssis (11) muni de roues (12) motrices à l'arrière et directrices à l'avant. Les roues (12) avant et arrière peuvent être toutes motrices et/ou directrices. A l'avant du châssis (11) est placée une cabine de pilotage (13) comportant un siège pour l'utilisateur ainsi qu'un volant de direction et les diverses commandes mécaniques, électriques ou hydrauliques des organes de travail de la machine. A l'arrière du châssis (11) est placée une unité d'entraînement (14). Celle-ci comporte un moteur thermique alimentant une centrale hydraulique pour l'entraînement et la commande des roues (12) et des différents organes de travail. Telle qu'elle est représentée sur la figure 4, la mélangeuse (10) automotrice se déplace dans une direction d'avancement (D). Dans la description qui suit, les notions « avant », « arrière », « gauche » et « droite » sont définies en référence à cette direction d'avancement (D).

La mélangeuse (10) comporte une cuve de mélange (15) montée sur le châssis (11) et des moyens de déchiquetage et de mixage de produits logés dans le fond de la cuve de mélange (15). Ces moyens sont constitués par deux vis (16) verticales. Les vis (16) sont représentées par transparence dans la cuve de mélange (15) de la mélangeuse (10). Un nombre inférieur ou supérieur de vis, y compris de vis horizontales, peut aussi être envisagé. Ces vis (16) verticales sont montées dans des paliers du plancher de la cuve de mélange (15) de manière à pouvoir tourner. Chaque vis (16) est munie de filets et/ou de pales avantageusement équipés à leur périphérie de couteaux ou de pièces analogues qui assurent la coupe des produits lors de la rotation des vis (16). Les vis (16) peuvent être entraînées en rotation à des vitesses modulables en fonction des opérations.

La mélangeuse (10) dispose également d'un bras de chargement (17) muni à son extrémité libre d'un organe de prélèvement (18) et équipé d'un dispositif de déplacement (5) de produits prélevés par l'organe de prélèvement (18) vers la cuve de mélange (15). Le bras de chargement (17) forme une sorte de tunnel dans lequel est logé le dispositif de déplacement (5). Il est articulé sur le châssis (11) au moyen d'un premier axe transversal (19), disposé avantageusement à proximité du bord supérieur de la cuve de mélange (15). Le bras de chargement (17) peut être positionné, au moyen du vérin (20), dans différentes positions pour saisir le ou les produits à charger. L'organe de prélèvement (18) est situé à l'extrémité avant du bras de chargement (17). L'organe de prélèvement (18) se présente sous la forme d'un rotor avec des couteaux qui sont de préférence disposés en spirale et est animé en rotation via une source d'énergie du type moteur hydraulique ou électrique.

Pour le chargement des produits, le bras de chargement (17) est positionné, au moyen du vérin (20), à la hauteur adéquate pour que l'organe de prélèvement (18) en rotation vienne saisir les produits. Les couteaux arrachent une certaine quantité de produits et les déplacent vers l'arrière en direction du dispositif de déplacement (5) logé à l'intérieur du bras de chargement (17). Ce dispositif de déplacement (5) convoie ensuite les produits en direction de la cuve de mélange (15) puisque la bande transporteuse (6) se déplace dans le sens B.

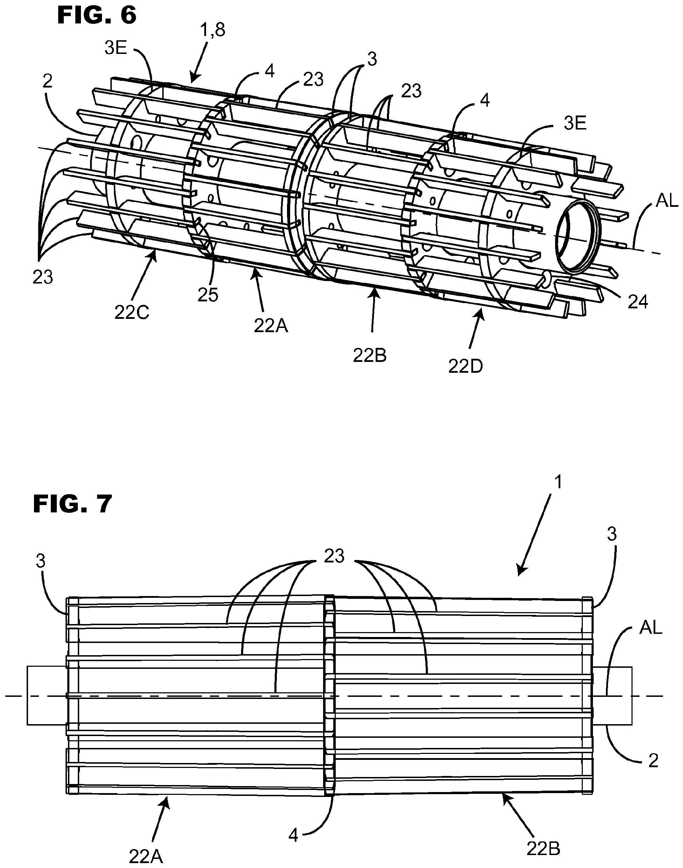

Tel que représenté aux figures 4 et 5, le dispositif de déplacement (5) comporte un rouleau moteur (7) disposé en aval dans le sens de déplacement des produits, et à proximité de l'organe de prélèvement (18), un rouleau suiveur (8) disposé à proximité de la cuve de mélange (15) et une bande transporteuse (6) enroulée autour desdits rouleaux (7 et 8). De préférence, le rouleau suiveur (8) est monté sur un axe de rotation postérieur fixe par rapport au bras de chargement (17), lequel est confondu avec le premier axe transversal (19). Cette caractéristique permet au rouleau suiveur (8) de conserver une position identique par rapport à la cuve de mélange (15), quelle que soit la position verticale du bras de chargement (17) par rapport au châssis (11). L'éloignement, notamment dans le sens de la hauteur, du rouleau suiveur (8) par rapport au bord supérieur de la cuve de mélange (15), demeure constant, ce qui améliore la distribution des produits de la bande transporteuse (6) en mouvement vers la cuve de mélange (15). La figure 1 illustre le rouleau moteur (7) avec un arbre support (2) traversant plein et la figure 6 illustre le rouleau suiveur (8) comportant un arbre support (2) creux. Les rouleaux (7, 8) disposent d'un diamètre identique avantageusement entre 100 et 200 mm. Le diamètre extérieur est de préférence de 150 mm. La bande transporteuse (6) comporte un brin supérieur (9) sur lequel reposent les produits, ces derniers sont canalisés entre ledit brin supérieur (9) de la bande transporteuse (6) et la forme de tunnel du bras de chargement (17). La bande transporteuse (6) est réalisée en matière souple, par exemple en caoutchouc, et comporte des barrettes transversales pour l'entraînement des produits. La bande transporteuse (6) est mise en mouvement au moyen d'un moteur (21), par exemple un moteur hydraulique. De préférence, ce moteur agit sur le rouleau moteur (7). Cette disposition permet au brin supérieur (9) de la bande transporteuse (6) d'être tiré par le rouleau moteur (7) et contribue donc au maintien d'une bonne tension de la bande transporteuse (6). Dans l'exemple de réalisation représenté, le moteur (21) est placé à proximité de l'organe de prélèvement (18). De préférence, il est prévu que l'axe du moteur (21) soit confondu avec l'axe de rotation du rouleau moteur (7). Cette caractéristique supprime l'emploi d'un moyen de transmission entre le moteur (21) et le rouleau moteur (7). Le moteur (21) entraîne le rouleau moteur (7) à une vitesse de rotation élevée, de manière à proposer un déplacement de la bande transporteuse (6). La vitesse de rotation est comprise entre 650 et 800 tr/min. Ce débit permet un chargement rapide de la cuve de mélange (15) par l'intermédiaire de l'organe de prélèvement (18). Dans une alternative non représentée, le moteur (21) est placé à proximité de la cuve de mélange (15).

Le bras de chargement (17) peut être déplacé autour du premier axe transversal (19) de liaison au châssis (11) entre une première position dans laquelle l'organe de prélèvement (18) est fortement rapproché du sol (voir figure 4) et une position médiane dans laquelle le bras de chargement (17) et la bande transporteuse (6) s'étendent sensiblement à l'horizontale. De préférence, le bras de chargement (17) peut en sus être déplacé vers une position fortement relevée (non représentée) dans laquelle l'organe de prélèvement (18) est placé à une hauteur du sol plus importante que le bord supérieur de la cuve de mélange (15). Les positions du bras de chargement (17) comprises entre la première position et la position médiane sont des positions dans lesquelles le rouleau moteur (7) est placé plus bas que le rouleau suiveur (8). De telles positions sont notamment utilisées pour le chargement des produits. Le bras de chargement (17) porte également un dispositif de tension (26) de la bande transporteuse (6) qui comporte un vérin autorisant un réglage et un rattrapage automatiques de la tension de la bande transporteuse (6) pendant le fonctionnement de la machine. Dans la plupart des cas, le dispositif de déplacement (5) équipant le bras de chargement (17) d'une mélangeuse (10) est utilisé pour transporter du produit d'une position basse vers la cuve de mélange (15). Le transport du produit est donc effectué selon une direction inclinée.

Selon une caractéristique avantageuse de l'invention, le rouleau (1, 7, 8) comporte deux portions (22A, 22B) à section générale cylindrique, chaque portion (22A, 22B) comporte une pluralité de lames (23) répartie sur le pourtour de la portion (22A, 22B) et deux portions (22A, 22B) voisines qui sont organisées en alternance. Grâce à cette structure spécifique, la rotation du rouleau (1, 7, 8) est régulière et plus uniforme. Le bruit de fonctionnement d'un tel rouleau (1, 7, 8) avec une bande transporteuse (6) est donc réduit. La présence des lames (23) permet d'éjecter le produit plus rapidement, ainsi le produit perturbe beaucoup moins le fonctionnement et le centrage de la bande transporteuse (6) sur les rouleaux (1, 7, 8). Les lames (23) créent également un flux d'air qui a tendance à souffler le produit et/ou les particules de produits qui s'accumulent à l'intérieur de la bande transporteuse (6). Un tel rouleau est donc moins sensible à l'encrassement, les intervalles de nettoyage et/ou de maintenance seront plus espacés. Un tel rouleau (1) est représenté à la figure 7. Il comporte deux portions (22A, 22B) chacune délimitée par deux flasques (3, 4). Les flasques (3E) sont placés au niveau des extrémités du rouleau (1). Dans ce mode de réalisation, les portions (22A et 22B) sont également délimitées par la largeur des lames (23). Le flasque (4) commun a une position centrale par rapport au rouleau (1) ce qui permet l'utilisation de lames (23) de même largeur pour chacune des portions (22A, 22B).

La figure 2 représente une vue latérale du rouleau de la figure 1 avec le flasque (3E) de la portion (22D) du rouleau (1, 7). Douze lames (23) sont réparties sur le pourtour du flasque (3E). Elles sont réparties régulièrement et écartées chacune d'un angle α de 30°. Les lames (23) de la portion (22A) sont également réparties régulièrement et écartées chacune d'un angle α de 30°. Le décalage angulaire, représenté par l'angle β entre une lame de la portion (22D) et une lame de la portion (22A), est de 15°. Ces angles sont amenés à évoluer en fonction du nombre de lames (23). Selon une autre caractéristique avantageuse de l'invention, deux portions (22A, 22B, 22C, 22D) voisines sont décalées angulairement, préférentiellement régulièrement, autour de l'axe longitudinal (AL) de telle sorte que les lames (23) de chacune des portions (22A, 22B, 22C, 22D) soient désalignées. Cet arrangement en alternance permet un contact alterné et réparti des lames (23) sur la largeur de la bande transporteuse (6). Le fonctionnement est donc plus fluide puisque les lames (23) vont être en contact alternativement avec la bande transporteuse (6). Dans la réalisation de la figure 1, le contact alterné des lames (23) avec la bande transporteuse (6) se fait tous les 7,5° dans l'ordre suivant des portions : 22C, 22B, 22A puis 22D. Un tel rouleau à quatre portions (22A, 22B, 22C, 22D) est donc beaucoup plus silencieux pour l'utilisateur de la mélangeuse (10) dont la cabine de pilotage (13) est située directement à côté des rouleaux (1, 7, 8) et de la bande transporteuse (6). L'usure de la bande transporteuse (6), notamment de son brin intérieur, est limitée puisqu'il n'y a plus de saccades et donc de pics de pression entre la bande transporteuse (6) et le rouleau (1, 7, 8). Dans une réalisation non illustrée, le contact alterné se fait dans un ordre différent des portions : 22C, 22D, 22A et 22B.

D'une manière préférentielle, une portion (22A, 22B, 22C, 22D) de rouleau (1, 7, 8) est délimitée par au moins un flasque (3), préférentiellement un disque pourvu ou non d'au moins une ouverture. Comme représenté sur les figures, les portions (22A, 22B) sont délimitées par deux flasques (3, 4) ou par la largeur des lames (23) et les portions (22C, 22D) sont délimitées par la largeur des lames (23). L'utilisation de flasques (3, 4) permet notamment le maintien de la tension de la bande transporteuse (6). Le flasque (3) stabilise le déplacement de la bande transporteuse (6). Dans l'exemple de réalisation, le flasque (3) a une forme circulaire, tel un disque de faible épaisseur. Une ou plusieurs ouvertures (24) sont ménagées dans le flasque (3) pour l'éjection de produits. Les lames (23) sont à fleur avec le pourtour du flasque (3). De préférence les lames (23) sont à fleur avec le pourtour de tous les flasques (3).

Selon une autre caractéristique de l'invention, le ou les flasques (3) s'étende(nt) au niveau ou à proximité de l'extrémité du rouleau (1, 7, 8). Dans l'exemple de réalisation préféré, tel qu'illustré par les figures 1, 3 et 6, les flasques (3E) sont décalés transversalement vers l'intérieur du rouleau (1) par rapport à l'axe longitudinal (AL). Le dépassement des lames (23) par rapport au flasque (3E) réalise un effet de ventilation qui participe au nettoyage du rouleau (1) puisque le produit tombant à côté de la bande transporteuse (6) est chassé. Ce phénomène est particulièrement intéressant lorsque le dispositif de déplacement (5) transporte de la poudre. Pour limiter les déformations des lames (23) des portions (22C et 22D), le flasque (3E) est placé dans la moitié extérieure des lames (23). Selon la réalisation préférée de l'invention, représentée sur les figures 1 à 6, le rouleau (1, 7, 8) comporte quatre portions (22A, 22B, 22C, 22D), chacune étant décalée par rapport à sa voisine.

D'une manière préférentielle, le rouleau (1, 7, 8) selon l'invention comporte un nombre de portion (22A, 22B, 22C, 22D) pair. Un tel arrangement par pair permet l'utilisation d'un flasque commun (4).

Les lames (23) sont enchâssées, soudées ou collées dans des encoches (25) réparties sur le pourtour du flasque (3). La structure de ce rouleau (1) est mécano soudé ce qui permet une réduction de poids.

Les lames (23) de chaque portion (22A, 22B, 22C, 22D) sont planes, radiales et au nombre de douze. Les lames (23) sont réparties autour de l'arbre support (2) de manière à former un volume cylindrique annulaire. Selon une vue de côté du rouleau (1, 7, 8), un espace vide s'étend entre l'arbre support (2) et les lames (23). Cet espace permet au produit d'être éjecté lors de la rotation du rouleau (1, 7, 8). Grâce à une telle construction, le rouleau cylindrique (1, 7, 8) est également moins enclin au colmatage. D'une manière avantageuse, les lames (23) sont axiales. Les lames (23) de chaque portion sont arrangées parallèlement à l'axe longitudinal (AL) du rouleau (1).

Comme illustré dans les figures, deux portions (22A, 22B, 22C, 22D) voisines peuvent disposer d'un flasque commun (4). Le nombre d'encoches (25) sur le pourtour du flasque commun (4) est donc double dans ce cas. Le rouleau (1) représenté sur les figures 1, 3 et 6 ne comporte pas de flasque commun entre les portions (22A et 22B) mais comporte deux flasques (3) distincts. Ces deux flasques (3) sont séparés l'un de l'autre de manière à créer un espace destiné au guidage de la bande transporteuse (6). Dans ce cas, le brin inférieur de la bande transporteuse (6) est muni d'une structure de guidage (non représentée).

Selon une caractéristique avantageuse de l'invention, les portions (22A, 22B, 22C, 22D) formant le rouleau (1, 7, 8) sont, vu selon l'axe longitudinal (AL), de largeur identique ou différente.

La cuve de mélange (15) comporte un orifice avec une trappe coulissante orientée sensiblement verticalement. Pendant le transport et pendant les opérations de chargement et de mixage des produits dans la cuve de mélange (15), la trappe est maintenue fermée. Pour la distribution des produits, les vis (16) de mélange animées en rotation poussent les produits à travers l'orifice dont la trappe (27) est plus ou moins ouverte afin d'ajuster le débit de passage du produit.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Rouleau (1, 7, 8) cylindrique d'axe longitudinal (AL) comportant au moins un arbre support (2) permettant au rouleau (1, 7, 8) de tourner autour de l'axe longitudinal (AL) et au moins un flasque (3) s'étendant transversalement à l'axe longitudinal (AL), ***caractérisé en ce que*** le rouleau (1, 7, 8) comporte deux portions (22A, 22B, 22C, 22D) à section générale cylindrique, chaque portion (22A, 22B, 22C, 22D) comporte une pluralité de lames (23) réparties sur le pourtour de la portion (22A, 22B, 22C, 22D) et deux portions (22A, 22B, 22C, 22D) voisines sont organisées en alternance.

2. Rouleau selon la revendication 1, ***caractérisé en ce que*** deux portions (22A, 22B, 22C, 22D) voisines sont décalées angulairement, préférentiellement régulièrement, autour de l'axe longitudinal (AL) de telle sorte que les lames (23) de chacune des portions (22A, 22B, 22C, 22D) soient désalignées.

3. Rouleau selon la revendication 1 ou 2, ***caractérisé en ce que*** une portion (22A, 22B, 22C, 22D) est délimitée par la largeur des lames (23) et/ou par au moins un flasque (3), préférentiellement un disque, pourvu ou non d'au moins une ouverture (24).

4. Rouleau selon l'une quelconque des revendications 1 à 3, ***caractérisé en ce que*** les lames (23) sont à fleur avec le pourtour du flasque (3).

5. Rouleau selon l'une quelconque des revendications 1 à 4, ***caractérisé en ce que*** les lames (23) sont enchâssées, soudées ou collées dans des encoches (25) réparties sur le pourtour du flasque (3).

6. Rouleau selon l'une quelconque des revendications 1 à 5, ***caractérisé en ce que*** les lames (23) de chaque portion (22A, 22B, 22C, 22D) sont planes, radiales et au nombre de douze.

7. Rouleau selon l'une quelconque des revendications 1 à 6, ***caractérisé en ce que*** les lames (23) de chaque portion (22A, 22B, 22C, 22D) sont axiales.

8. Rouleau selon l'une quelconque des revendications 1 à 7, ***caractérisé en ce que*** le nombre de portions (22A, 22B, 22C, 22D) est un nombre pair.

9. Rouleau selon l'une quelconque des revendications 1 à 8, ***caractérisé en ce que*** deux portions (22A, 22B, 22C, 22D) voisines peuvent disposer d'un flasque commun.

10. Rouleau selon l'une quelconque des revendications 1 à 9, ***caractérisé en ce que*** les portions (22A, 22B, 22C, 22D) sont, vu selon l'axe longitudinal (AL), de largeur identique.

11. Rouleau selon l'une quelconque des revendications 1 à 8, ***caractérisé en ce que*** les portions (22A, 22B, 22C, 22D) sont, vu selon l'axe longitudinal (AL), de largeur différente.

12. Rouleau selon l'une quelconque des revendications 1 à 11, ***caractérisé en ce que*** l'arbre support (2) est un arbre continu ou un arbre en deux parties.

13. Dispositif de déplacement (5) comportant une bande transporteuse (6) enroulée autour de deux rouleaux (1, 7, 8), dont au moins un des rouleaux (1, 7, 8) est caractérisé selon l'une quelconque des revendications 1 à 12.

14. Machine agricole présentant au moins un dispositif de déplacement (5) selon la revendication 13, ***caractérisée en ce qu'***il s'agit d'une mélangeuse ou d'un andaineur à tapis.
